# EUROPEAN PATENT APPLICATION

(11) **EP 4 369 046 A1**
(43) Date of publication of application: **15.05.2024**
(21) Application number: 22860219.9
(22) Date of filing: 05.08.2022
(51) Int. Cl.: G01S 19/33, H04M 1/72457

(54) **DISPLAY METHOD, ELECTRONIC DEVICE, AND SYSTEM**

(30) Priority: 24.08.2021 CN 202110974458
(71) Applicant: Huawei Technologies Co., Ltd., Longgang Shenzhen, Guangdong 518129 (CN)
(72) Inventor: HUANG, Su, Shenzhen, Guangdong 518129 (CN)
(74) Representative: Isarpatent
(86) International application number: PCT/CN2022/110596
(87) International publication number: WO 2023/024873

(57) **Abstract**

This application provides a display method, an electronic device, and a system. The method is applied to a terminal device. The method includes: The terminal device receives a user operation, where the user operation indicates to display a current location of the terminal device; in response to the user operation, the terminal device obtains the current location of the terminal device by using at least two positioning methods to obtain at least two locations; and the terminal device displays the at least two locations and a label on a map, where the label is used to distinguish between the at least two locations. By implementing embodiments of this application, the terminal device may display at least two locations. The at least two locations are current locations of the terminal device that are obtained by using at least two positioning methods. The method can meet a positioning display requirement of a user, thereby improving user experience.

## Description

This application claims priority to Chinese Patent Application No. 202110974458.7, filed with the China National Intellectual Property Administration on August 24, 2021 and entitled "DISPLAY METHOD, ELECTRONIC DEVICE, AND SYSTEM", which is incorporated herein by reference in its entirety.

### TECHNICAL FIELD

Embodiments of this application relate to terminal technologies, and in particular, to a display method, an electronic device, and a system.

### BACKGROUND

Currently, a terminal device may determine and display a current location of the terminal device by using a positioning technology, so that a user can determine a location of the user by using the location displayed on the terminal device, thereby bringing convenience to life of the user.

With development of fifth generation mobile communication technologies, more positioning technologies can be used to position a terminal device. When the terminal device is located in different areas, location information obtained by the terminal device based on various positioning methods may be different. For example, in an indoor-outdoor handover process of the terminal device, location information generated by using different positioning methods may change greatly. In a conventional technology, a terminal device displays only one terminal location, and the terminal location is obtained by the terminal device by using a single positioning method or by combining a plurality of positioning methods. Therefore, a user cannot learn of availability of each positioning method at different moments or in different areas, and it is difficult to meet a positioning display requirement of the user.

How to meet the positioning display requirement of the user and improve user experience is a current and future research direction.

### SUMMARY

This application provides a display method, an electronic device, and a system. A terminal device may display at least two locations. The at least two locations are current locations of the terminal device obtained based on at least two positioning methods, and can meet a positioning display requirement of a user, thereby improving user experience.

According to a first aspect, an embodiment of this application provides a display method, applied to a terminal device. The method includes:
the terminal device receives a user operation, where the user operation indicates to display a current location of the terminal device;
in response to the user operation, the terminal device obtains the current location of the terminal device by using at least two positioning methods to obtain at least two locations; and
the terminal device displays the at least two locations and a label on a map, where the label is used to distinguish between the at least two locations.

By implementing the method in the first aspect, the terminal device may display the at least two locations. The at least two locations are current locations of the terminal device that are obtained based on at least two positioning methods. Correspondingly, a user may determine a location of the user based on the at least two locations displayed on the terminal device. The method can meet a positioning display requirement of the user that expects to display locations obtained by using a plurality of positioning methods. The user may also compare positioning precision of different positioning methods in different areas based on display of the at least two locations, thereby greatly improving user experience.

Availability of different positioning methods varies in different areas. For example, a 5G positioning method has higher precision indoors, and a satellite positioning method has higher precision outdoors. However, in a conventional technology, because a terminal device displays only a location obtained based on the 5G positioning method, a location obtained based on the satellite positioning method, or a location obtained by combining the 5G positioning method and the satellite positioning method, the location displayed on the terminal device may have low precision indoors or low precision outdoors. By implementing the method in the first aspect, the terminal device may display both the location obtained based on the 5G positioning method and the location obtained based on the satellite positioning method, and the user can determine the current location independently. In this way, the user can participate in the positioning process, thereby greatly improving use interest of the user.

With reference to the first aspect, in a possible implementation, positioning technologies used in the at least two positioning methods are different and/or devices for calculating locations in the at least two positioning methods are different.

With reference to the first aspect, in a possible implementation, the label indicates a positioning technology that is used in at least one of the at least two positioning methods or that indicates a device for calculating at least one of the at least two locations.

With reference to the first aspect, in a possible implementation, the obtaining the current location of the terminal device by using at least two positioning methods includes:
the terminal device receives a first location and a first identifier that are sent by a positioning device, where the first location is the current location of the terminal device obtained by the positioning device by using one of the at least two positioning methods, and the at least two locations include the first location; and
the terminal device generates the label based on the first identifier.

With reference to the first aspect, in a possible implementation, where the at least two positioning methods include a 5G positioning method using a fifth generation mobile communication technology 5G, the at least two locations include a second location, and the second location is obtained by using the 5G positioning method.

With reference to the first aspect, in a possible implementation, that the terminal device displays the at least two locations on a map includes:
the terminal device separately displays icons at the at least two locations on the map.

With reference to the first aspect, in a possible implementation, the icons displayed at the at least two locations have different colors and/or shapes.

With reference to the first aspect, in a possible implementation, the method further includes:
the terminal device displays an error range of each of the at least two locations by using the location as a center.

With reference to the first aspect, in a possible implementation, the method further includes:
the terminal device identifies a current environment based on the at least two locations; and
the terminal device determines, based on a correspondence between an environment and a positioning method, that a target location is a location obtained by using a positioning method corresponding to the current environment, where an icon displayed at the target location is different from an icon displayed at a location other than the target location among the at least two locations.

According to a second aspect, this application provides an electronic device. The electronic device may include a memory and a processor. The memory may be configured to store a computer program. The processor may be configured to invoke a computer program, so that the electronic device performs the method according to any one of the first aspect or the possible implementations of the first aspect.

According to a third aspect, this application provides a computer program product including instructions. When the computer program product runs on an electronic device, the electronic device is enabled to perform the method according to any one of the first aspect or the possible implementations of the first aspect.

According to a fourth aspect, this application provides a computer-readable storage medium, including instructions. When the instructions are run on an electronic device, the electronic device is enabled to perform the method according to any one of the first aspect or the possible implementations of the first aspect.

It can be understood that the electronic device provided in the second aspect, the computer program product provided in the third aspect, and the computer-readable storage medium provided in the fourth aspect are all configured to perform the display method provided in the embodiments of this application. Therefore, for beneficial effects that can be achieved, refer to the beneficial effects in the corresponding methods. Details are not described herein again.

### BRIEF DESCRIPTION OF DRAWINGS

FIG. 1 is a schematic architectural diagram of a display system according to an embodiment of this application;
FIG. 2 is a schematic architectural diagram of another display system according to an embodiment of this application;
FIG. 3 is a schematic diagram of a hardware structure of a terminal device 100 according to an embodiment of this application;
FIG. 4A is a block diagram of a software structure of a terminal device 100 according to an embodiment of this application;
FIG. 4B is a schematic diagram of an operating system and an application according to an embodiment of this application;
FIG. 5 is a schematic flowchart of a display method according to an embodiment of this application;
FIG. 6A to FIG. 6C are interface diagrams in which a display method is applied to a terminal device according to an embodiment of this application;
FIG. 7A is a schematic diagram of displaying icons according to an embodiment of this application;
FIG. 7B is a schematic diagram of displaying an error range according to an embodiment of this application;
FIG. 7C is a schematic diagram of displaying a label according to an embodiment of this application;
FIG. 7D is a schematic diagram of displaying an arrow according to an embodiment of this application;
FIG. 8A is a schematic diagram of displaying locations by a terminal device according to an embodiment of this application;
FIG. 8B is another schematic diagram of displaying locations by a terminal device according to an embodiment of this application;
FIG. 8C is still another schematic diagram of displaying locations according to an embodiment of this application; and
FIG. 8D is yet another schematic diagram of displaying locations according to an embodiment of this application.

### DESCRIPTION OF EMBODIMENTS

The technical solutions according to embodiments of this application are clearly and completely described in the following with reference to the accompanying drawings. In the descriptions of the embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of the embodiments of this application, "a plurality of" means two or more than two.

In the following, the terms "first" and "second" are merely intended for a purpose of description, and shall not be understood as an indication or implication of relative importance or implicit indication of a quantity of indicated technical features. Therefore, features defined by "first" and "second" may explicitly or implicitly include one or more of the features. In the descriptions of the embodiments of this application, "a plurality of" means two or more unless otherwise specified.

A term "user interface (user interface, UI)" in the following embodiments of this application is a medium interface for interaction and information exchange between an application program or an operating system and a user, and implements conversion between an internal form of information and a form that can be accepted by the user. Source code of the user interface is written in a particular computer language such as Java or an extensible markup language (extensible markup language, XML). The interface source code is parsed and rendered on an electronic device, and is finally presented as content that can be identified by the user. The user interface is usually represented in a form of a graphical user interface (graphic user interface, GUI), which is a user interface displayed in a graphical mode and related to computer operations. The user interface may be a visual interface element such as a text, an icon, a button, a menu, a tab, a text box, a dialog box, a status bar, a navigation bar, or a widget displayed on a display screen of the electronic device.

The technical solutions of embodiments of this application may be applied to various communication systems, such as a global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a 4^{th} generation (4^{th} generation, 4G) mobile communication system, a 5^{th} generation (5^{th} Generation, 5G) mobile communication system, or a new radio access technology (new radio Access Technology, NR).

The following first describes technical terms used in the embodiments of this application.

### 1. Satellite positioning technology

The satellite positioning technology is a method for performing positioning by using a satellite. It should be noted that the satellite positioning technology may also be referred to as a global navigation satellite system (global navigation satellite system, GNSS) positioning technology.

A GNSS is a space-based radio navigation display system that can provide users with all-weather three-dimensional coordinates, speed, and time information at any place on the surface of earth or near-earth space. The GNSS includes the Global Display System (Global Positioning System, GPS) of the United States, the GLONASS Satellite Navigation System (global navigation satellite system, GLONASS) of Russia, the GALILEO Satellite Navigation System (Galileo satellite navigation system, GALILEO) of the European Union, the BeiDou Satellite Navigation System (BeiDou Navigation Satellite System, BDS) of China, the Quasi-zenith Satellite System (quasi-zenith satellite system, QZSS), and the Indian Regional Navigation Satellite System (Indian Regional Navigation Satellite System (IRNSS), NAVIC).

The GNSS includes a space satellite, a ground control part, and user equipment. The user equipment is a receiver.

A basic principle of the GNSS positioning technology is to measure a distance between a satellite at a known location and a receiver of a user, and then obtain a specific location of the receiver by combining data of a plurality of satellites. For example, a satellite continuously sends, in the air, a satellite signal carrying time and location information to a receiver. After capturing a tracked satellite signal, the receiver may measure a pseudorange from a receive antenna to the satellite and a change rate of a distance, and demodulate data such as a satellite orbit parameter. According to the foregoing data, a micro-processing computer in the receiver may perform positioning calculation according to a positioning solution method to calculate information such as latitude, height, speed, and time of a geographical location of a user.

The GNSS positioning technology includes a GNSS-GPS positioning technology, a GNSS-BDS positioning technology, a GNSS-GLONASS positioning technology, a GNSS-GALILEO positioning technology, a GNSS-QZSS positioning technology, a GNSS-NAVIC positioning technology, and the like.

In the embodiments of this application, a terminal device may calculate a current location of the terminal device by using the foregoing GNSS positioning technology; or the satellite may calculate a current location of the terminal device by using the foregoing GNSS positioning technology, and send the location to the terminal device.

### 2. Cellular (Cellular) positioning technology

A cellular positioning technology is a technology that positions a mobile unit within a coverage area based on an existing cellular network. A cellular network (Cellular network), also referred to as a mobile network (mobile network), is a mobile communication hardware architecture, and includes a GSM network, a CDMA network, a 4G network, a 5G network, and the like. The mobile unit includes an intelligent terminal such as a mobile phone or a tablet computer. A positioning technology based on the 5G network may be referred to as a 5G positioning technology.

A basic principle of the cellular positioning technology is to use location information included in an existing mobile communication network to achieve a positioning objective. Technologies that may be used in the cellular positioning technology include an angle of arrival (Angle of arrival, AOA) of a signal, a time difference of arrival (time difference of arrival, TDOA) of a signal, and the like.

To describe the display method provided in the embodiments of this application more clearly and in detail, the following first describes a display system provided in the embodiments of this application.

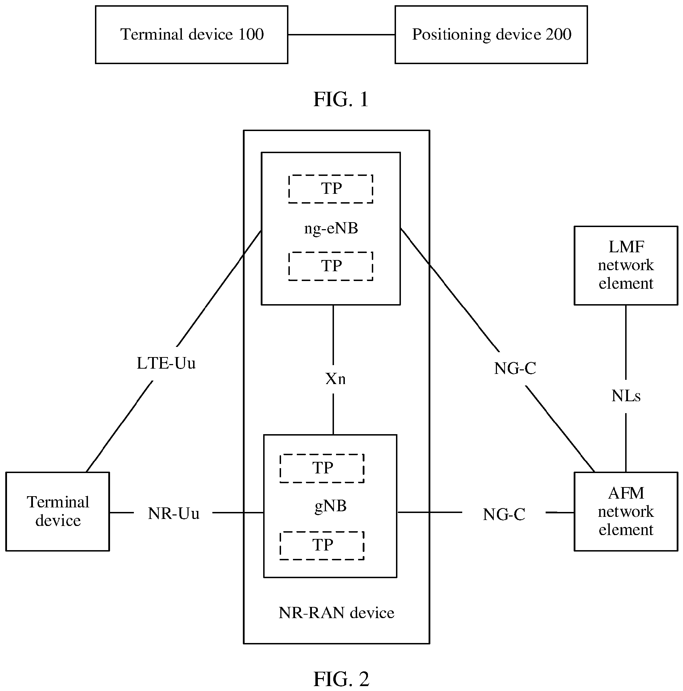

FIG. 1 is a schematic architectural diagram of a display system to which a display method according to an embodiment of this application is applied. As shown in FIG. 1, the display system includes a terminal device 100 and a positioning device 200. The positioning device 200 may be an apparatus or a component that provides a positioning function for the terminal device 100.

In an implementation, the positioning device 200 may include one or more access network devices and a positioning network element. The terminal device 100, the access network device, and the positioning device 200 may directly communicate with each other or may communicate with each other through forwarding by another device. This is not specifically limited in this embodiment of this application. Although not shown, the positioning system may further include another network element such as a mobility management network element. This is not specifically limited in this embodiment of this application. For example, the positioning network element may determine a location of the terminal device 100, and send the location of the terminal device 100 to the terminal device 100 through the access network device. Correspondingly, the terminal device 100 receives the location sent by the access network device, and displays the location.

In another implementation, the positioning device 200 may alternatively be a device in a GNSS, for example, a satellite.

The access network device may be any communication device that has a wireless transceiver function and that is configured to communicate with a terminal. The access network device includes but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a TRP, or the like. The access network device may alternatively be a gNB, a TRP, or a TP in a 5G system, or one antenna panel or a group of antenna panels (including a plurality of antenna panels) of a base station in a 5G system. In addition, the access network device may alternatively be a network node that constitutes a gNB or a TP, for example, a BBU or a distributed unit (distributed unit, DU).

The positioning network element may be a location management function (location management function, LMF) network element or a location management component (location management component, LMC) network element, or may be a local location management function (local location management function, LLMF) network element located in a network device.

The terminal device 100 may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a terminal in a future 5G network, a terminal in a future evolved PLMN, a terminal in a future internet of vehicles, or the like. This is not limited in the embodiments of this application.

By way of example, and not limitation, in the embodiments of this application, the terminal device 100 may be a mobile phone, a tablet computer, a computer with a wireless transceiver function, a virtual reality terminal, an augmented reality terminal, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

In addition, the terminal device 100 in the embodiments of this application may alternatively be a terminal in an internet of things (internet of things, IoT) system. IoT is an important part of future information technology development. A main technical feature of the IoT is to connect an object to a network by using a communication technology, to implement an intelligent network for human-machine interconnection and thing-thing interconnection. In the embodiments of this application, the IoT technology may implement massive connections, deep coverage, and terminal power saving by using, for example, a narrowband (narrowband, NB) technology.

In addition, in the embodiments of this application, the terminal device 100 may alternatively include a sensor such as an intelligent printer, a train detector, or a gas station. Main functions of the terminal device 100 include collecting data (for some terminals), receiving control information and downlink data from an access network device, sending an electromagnetic wave, and transmitting uplink data to the access network device.

Optionally, the terminal device 100, the access network device, or the positioning network element in this embodiment of this application may be deployed on land, including an indoor place or an outdoor place, and being held in hand or mounted in a vehicle; may be deployed on water; or may be deployed on an airplane, a balloon, or an artificial satellite in the air. An application scenario of the terminal, the access network device, or the positioning network element is not limited in this embodiment of this application.

Optionally, in this embodiment of this application, the terminal, the access network device, or the positioning device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by the terminal, the access network device, or the positioning device, or a functional module that can invoke and execute the program in the terminal, the access network device, or the positioning device.

In other words, a related function of the terminal, the access network device, or the positioning device in this embodiment of this application may be implemented by one device, may be jointly implemented by a plurality of devices, or may be implemented by one or more functional modules in one device. This is not specifically limited in this embodiment of this application. It may be understood that the foregoing function may be a network element in a hardware device, may be a software function running on dedicated hardware, a combination of hardware and software, or a virtualized function instantiated on a platform (for example, a cloud platform).

Optionally, the display system provided in this embodiment of this application is applicable to the foregoing communication systems. A 5G mobile communication system is used as an example, and a network element or an entity corresponding to the access network device may be a next-generation radio access network (next-generation radio access network, NG-RAN) device in the 5G mobile communication system. A network element or an entity corresponding to the foregoing mobility management network element may be an access and mobility management function (access and mobility management function, AMF) network element in the 5G mobile communication system. This is not specifically limited in this embodiment of this application.

For example, FIG. 2 is a schematic architectural diagram of a display system to which a display method according to an embodiment of this application is applied in a 5G mobile communication system.

As shown in FIG. 2, in the display system, a terminal device is connected to a radio access network by using an LTE-Uu interface and a next-generation evolved NodeB (next-generation evolved NodeB, ng-eNB) or by using an NR-Uu interface and a next-generation NodeB (next-generation NodeB, gNB). The radio access network is connected to a core network by using an NG-C interface and an AMF network element. The NG-RAN includes one or more ng-eNBs (where in FIG. 2, one ng-eNB is used as an example for illustration). The NG-RAN may also include one or more gNBs (where in FIG. 2, one gNB is used as an example for illustration). The NG-RAN may further include one or more ng-eNBs and one or more gNBs. The ng-eNB is an LTE base station connected to the 5G core network, and the gNB is a 5G base station connected to the 5G core network. The core network includes the AMF network element and the LMF network element. The AMF network element is configured to implement a function such as access management, and the LMF network element is configured to implement a function such as positioning or positioning assistance. The AMF network element is connected to the LMF network element through an NLs interface.

It should be further understood that the device or function node included in the display system in FIG. 2 is merely an example for description, and does not constitute a limitation on the embodiments of this application. Actually, the display system in FIG. 2 may further include another network element, device, or function node that has an interaction relationship with the device or function node shown in the figure. This is not specifically limited herein.

Based on the display system in FIG. 2, the following describes a part of a positioning method in a cellular positioning technology.
(1) Downlink time difference of arrival (downlink time difference of arrival, DL-TDOA) positioning method: A terminal device measures a signal time difference of arrival (reference signal time difference, RSTD) for a positioning reference signal (Positioning reference signal, PRS) of each cell, and reports a measurement result to an LMF, and the LMF calculates a location of the terminal device.
(2) Uplink time difference of arrival (uplink time difference of arrival, UL-TDOA or UL TDOA) positioning method: Each cell measures an uplink relative time of arrival (Uplink relative time of arrival, UL-RTOA) of a sounding reference signal (Sounding reference signal, SRS) of a terminal device, and reports a measurement result to an LMF, and the LMF calculates a location of the terminal device.
(3) Downlink angle of departure (downlink angle of departure, DL-AoD) positioning method: A terminal device measures PRS-RSRP of a PRS signal of each cell, and reports a measurement result to an LMF, and the LMF calculates a location of the terminal device.
(4) An uplink angle of arrival (uplink arrival of arrival, UL-AoA) positioning method: Each cell measures an azimuth of arrival (Azimuth of Arrival, AOA) or a zenith of arrival (Zenith of Arrival, ZOA) of an SRS signal of a terminal device, and reports a measurement result to an LMF, and the LMF calculates a location of the terminal device.
(5) Enhanced cell identity (enhanced cell ID, E-CID) positioning method: A terminal device measures a synchronization signal (SS-RSRP/SS-RSRQ/SS-SINR) of a synchronization signal (Synchronization signal/physical broadcast channel block, SSB) of each cell, and reports a measurement result to an LMF, and the LMF calculates a location of the terminal device.
(6) Multi-cell round trip time (multi-cell round trip time, Multi-RTT) positioning method: A terminal device measures a receive-transmit time difference (terminal device Rx-Tx time difference) of a PRS signal of each cell, and reports a measurement result to an LMF. Each cell measures a receive-transmit time difference (gNB Rx-Tx time difference) of an SRS signal of the terminal device, and reports a measurement result to the LMF, and the LMF calculates a location of the terminal device.

The following shows an example of a positioning technology supported by UE. Refer to the following Table 1.

**Table 1 Modes supported by the UE positioning method**

| Method (Method) | UE-based | UE-assisted, LMF-based | NG-RAN node assisted | SUPL |
|---|---|---|---|---|
| A-GNSS | Yes | Yes | No | Yes |
| OTDOA | No | Yes | No | Yes |
| E-CID | No | Yes | Yes | Yes for E-UTRA |
| Sensor | Yes | Yes | No | No |
| WLAN | Yes | Yes | No | Yes |
| Bluetooth | No | Yes | No | No |
| TBS Note 5 | Yes | Yes | No | Yes (MBS) |
| DL-TDOA | Yes | Yes | No | Yes |
| DL-AoD | Yes | Yes | No | Yes |
| Multi-RTT | No | Yes | Yes | Yes |
| NR E-CID | No | Yes | Yes | Yes (DL NR E-CID) |
| UL-TDOA | No | No | Yes | Yes |
| UL-AoA | No | No | Yes | Yes |

UE-based indicates that a terminal device is an execution entity for calculating a location of the terminal device. UE-assisted LMF-based indicates that a terminal performs measurement, and an LMF calculates a location of the terminal. NG-RAN node assisted indicates that a base station performs measurement, and an LMF calculates a location of a terminal. SUPL is a user plane positioning protocol, a corresponding server is an SLP, and a corresponding terminal is an SET. The SET may alternatively be an application in a conventional terminal.

Yes indicates supported, and No indicates not supported. The second row and the second column are used as an example for description. "Yes" indicates that UE supports the terminal device in calculating a current location of the terminal device based on an A-GNSS positioning technology.

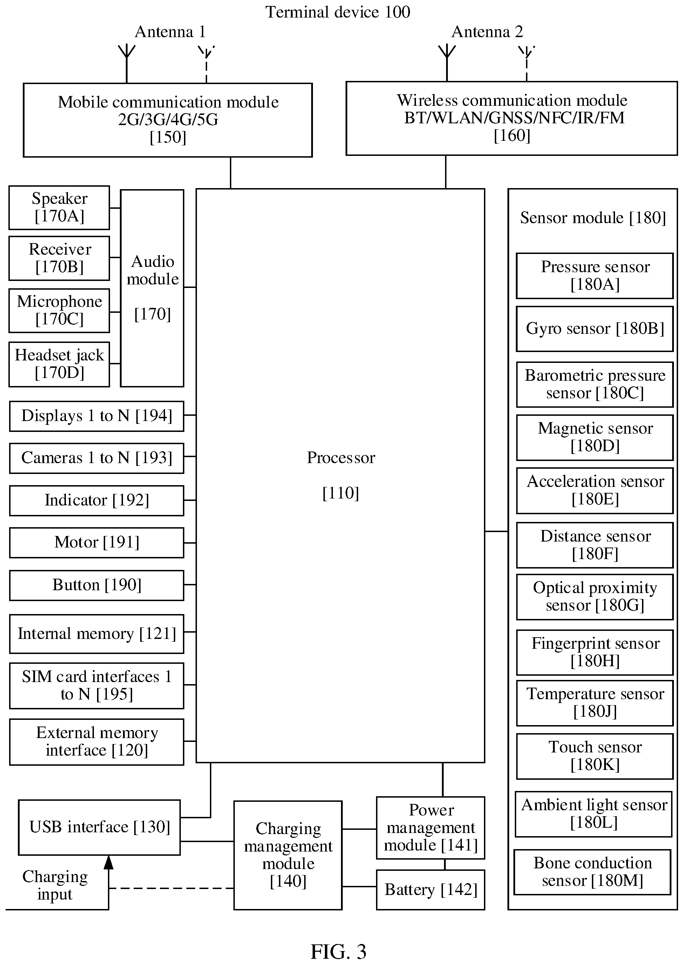

FIG. 3 is a schematic diagram of a hardware structure of a terminal device 100.

The terminal device 100 is used as an example below to describe the embodiments in detail. It should be understood that the terminal device 100 may have more or fewer components than those shown in the figure, or two or more components may be combined, or different component arrangements may be used. Various components shown in the figure may be implemented in hardware, software, or in a combination of hardware and software that includes one or more signal processing and/or application-specific integrated circuits.

The terminal device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on instruction operation code and a time sequence signal, to complete control of instruction fetching and instruction execution.

The processor 110 may further be provided with a memory, configured to store instructions and data. In some embodiments, the memory in the processor 110 is a cache memory. The memory may store instructions or data recently used or repeatedly used by the processor 110. If the processor 110 needs to use the instructions or the data again, the processor 110 may directly invoke the instructions or the data from the memory, thereby avoiding repeated access, reducing waiting time of the processor 110, and improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPIinterface includes a camera serial interface (camera serial interface, CSI), a display serial interface (display serial interface, DSI), and the like. In some embodiments, the processor 110 communicates with the camera 193 through the CSI, to implement a photographing function of the terminal device 100. The processor 110 communicates with the display 194 through the DSI interface, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to an SIM card or reading data in an SIM card.

The USB interface 130 is an interface that conforms to a USB standard specification, and may be specifically a mini USB interface, a micro USB interface, a USB type-C interface, or the like. The USB interface 130 may be configured to connect to the charger to charge the terminal device 100, or may be configured to transmit data between the terminal device 100 and a peripheral device, or may be configured to connect to a headset for playing audio through the headset. The interface may be further configured to connect to another electronic device such as an AR device.

It can be understood that an interface connection relationship between the modules shown in this embodiment of this application is merely an example for description, and constitutes no limitation on the structure of the terminal device 100. In some other embodiments of this application, different interface connection manners in the foregoing embodiments or a combination of a plurality of interface connection manners may alternatively be used for the terminal device 100.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the terminal device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution applied to the terminal device 100, to wireless communication including a wireless local area network (wireless local area networks, WLAN) (for example, a wireless fidelity (wireless fidelity, Wi-Fi) network), Bluetooth (Bluetooth, BT), a global navigation satellite system, frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In this embodiment of this application, the wireless communication module 160 may receive a location of the terminal device 100 that is sent by a positioning device. For example, the wireless communication module 160 receives a current location of the terminal device 100 that is sent by a 5G core network, or may receive data sent by the positioning device, for example, receive a sounding signal sent by a satellite for the terminal device 100.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division synchronous code division multiple access (time-division code division multiple access, TD-SCDMA), long term evolution (long term evolution, LTE), BT, a GNSS, a WLAN, NFC, FM, an IR technology, and/or the like. The GNSS may include a global display system, a global navigation satellite system (global navigation satellite system, GLONASS), a BeiDou navigation satellite system, a quasi-zenith satellite system, and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a microLED, a micro-OLED, a quantum dot light-emitting diode (quantum dot light-emitting diode, QLED), and the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a format such as standard RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transformation on frequency energy.

The video codec is configured to compress or decompress a digital video. The terminal device 100 may support one or more video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure such as a transmission mode between neurons in a human brain to perform rapid processing on input information, and can perform continuous selflearning. The NPU may be used to implement applications such as intelligent cognition of the terminal device 100, for example, image recognition, facial recognition, voice recognition, and text understanding.

The external memory interface 120 may be configured to connect to an external storage card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a facial recognition function, a fingerprint recognition function, and a mobile payment function), and the like. The data storage area may store data (such as facial information template data and a fingerprint information template) created during use of the terminal device 100. In addition, the internal memory 121 may include a high-speed random access memory, or may include a nonvolatile memory, for example, at least one magnetic disk storage device, a flash memory, or a universal flash storage (universal flash storage, UFS).

The terminal device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be configured to listen to music or answer a call in a hands-free mode by using the speaker 170A.

The receiver 170B, also referred to as an "earpiece", is configured to convert an audio electrical signal into a sound signal. When a call is answered or voice information is received by using the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to implement a noise reduction function in addition to collecting a sound signal. In some other embodiments, three, four, or more microphones 170C may alternatively be disposed in the terminal device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure intensity based on the change in the capacitance. When a touch operation is performed on the display 194, the terminal device 100 detects intensity of the touch operation through the pressure sensor 180A. The terminal device 100 may further calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the terminal device 100. In some embodiments, an angular velocity of the terminal device 100 around three axes (to be specific, axes x, y, and z) may be determined by using the gyro sensor 180B. The gyro sensor 180B may be configured to implement image stabilization during photographing. For example, when the shutter is pressed, the gyro sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyro sensor 180B may further be used in a navigation scenario and a somatic game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip leather case by using the magnetic sensor 180D. In some embodiments, when the terminal device 100 is a flip phone, the terminal device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect values of accelerations of the terminal device 100 in various directions (usually on three axes). When the terminal device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The terminal device 100 may measure the distance in an infrared manner or a laser manner. In some embodiments, in a photographing scenario, the terminal device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The terminal device 100 emits infrared light by using the light emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to avoid an accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J. For example, when the temperature reported by the temperature sensor 180J exceeds a threshold, the terminal device 100 lowers performance of a processor near the temperature sensor 180J, to reduce power consumption and implement thermal protection. In some other embodiments, when the temperature is less than another threshold, the terminal device 100 heats the battery 142 to prevent the terminal device 100 from being shut down abnormally due to a low temperature. In some other embodiments, when the temperature is less than still another threshold, the terminal device 100 boosts an output voltage of the battery 142 to avoid abnormal shutdown due to a low temperature.

The touch sensor 180K is also referred to as a touch panel. The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal device 100 at a location different from that of the display 194.

The button 190 includes a power button, a volume button, and the like. The button 190 may be a mechanical button, or may be a touch button. The terminal device 100 may receive a key input, and generate a key signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, photo taking and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The terminal device 100 interacts with a network by using the SIM card, to implement functions such as conversation and data communication.

In this embodiment, the terminal device 100 may perform the display method by using the processor 110.

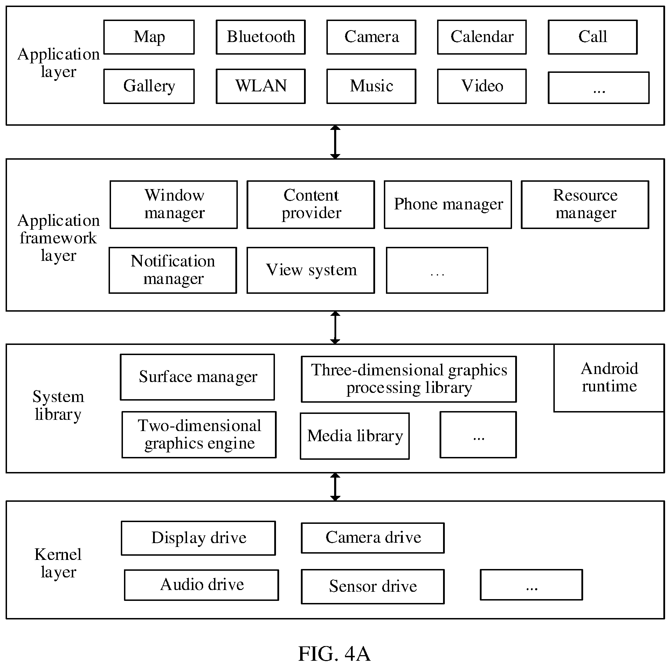

FIG. 4A is a block diagram of a software structure of a terminal device 100 according to an embodiment of this application.

In a layered architecture, software is divided into several layers, and each layer has a clear role and task. The layers communicate with each other through software interfaces. In some embodiments, the Android system is divided into four layers: an application layer, an application framework layer, an Android runtime (Android runtime) and a system library, and a kernel layer from top to bottom.

The application layer may include a series of application packages.

As shown in FIG. 4A, the application packages may include applications such as a map, a gallery, a calendar, a call, a WLAN, Bluetooth, music, a video, and a camera.

In some embodiments, the terminal device 100 displays at least two locations of a terminal device 100 on a map.

The application framework layer provides an application programming interface (application programming interface, API) and a programming framework for an application in the application layer. The application framework layer includes some predefined functions.

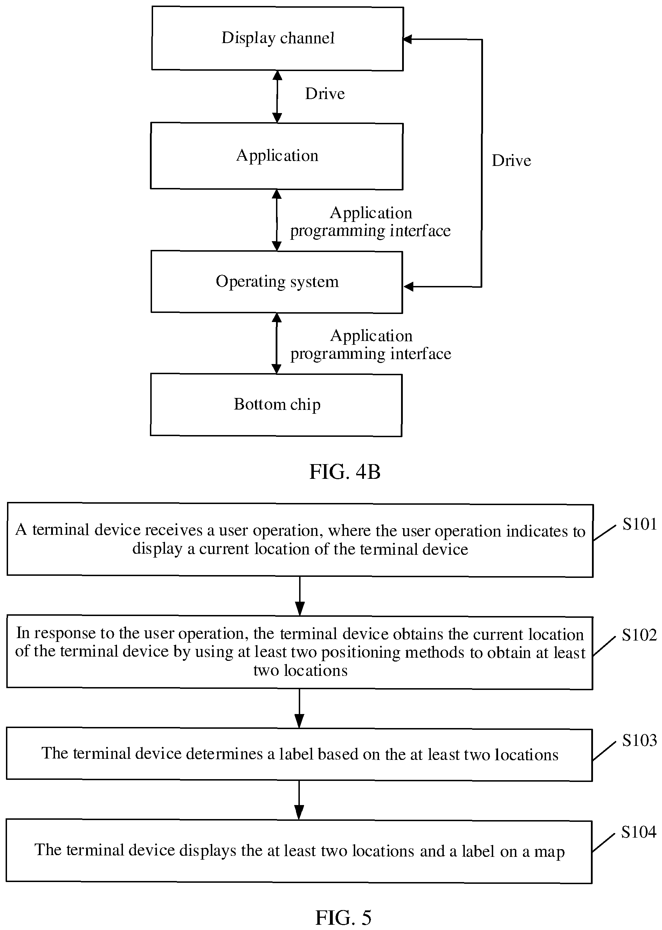

FIG. 4B is a schematic diagram of an operating system and an application according to an embodiment of this application. As shown in FIG. 5, an application (application) and an operating system (operating system, OS) of a terminal device 100 may be separated based on a form of an API. For example, the operating system kernel of the terminal device forwards information to the application of the terminal based on information provided by a chip (chipset(s)). After the application obtains the information, an appropriate display method may be selected based on a requirement of the application and user customization. For another example, the chip may obtain a location of the terminal device that is obtained by a positioning device through calculation, and send the location of the terminal device to the application or the operating system. The application or the operating system may optimize the location of the terminal device, for example, calibrate a device of the terminal device by invoking a camera to obtain an environmental image, to obtain one of the at least two locations.

As shown in FIG. 4A, an application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and so on.

The content provider is configured to: store and obtain data, and make the data accessible to an application. The data may include a video, an image, audio, calls made and answered, a browse history, a bookmark, a phone book, and the like.

The view system includes a visual control, for example, a text display control or a picture display control. The view system may be configured to build an application. A display interface may include one or more views. For example, a display interface including an SMS message notification icon may include a text display view and an image display view.

The phone manager is configured to provide a communication function for the terminal device 100, for example, management of a call status (including answering, declining, or the like).

The resource manager provides an application with various resources, for example, a localized string, an icon, a picture, a layout file, and a video file.

The notification manager enables an application to display, in the status bar, notification information, which may be used to convey a notification-type message that can automatically disappear after a short stay without user interaction. For example, the notification manager is configured to: notify download completion, and give a message notification. The notification manager may alternatively display a notification in a form of a chart or a scroll bar text in a status bar at the top of the system, for example, a notification of an application run in the background, or may display a notification in a form of a dialog interface on the screen. For example, text information is displayed in the status bar, an announcement is given, the electronic device vibrates, or the indicator light blinks.

A runtime (Runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide fusion of 2-dimensional (2-Dimensional, 2D) and 3-dimensional (3-Dimensional, 3D) layers to a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The 3-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

With reference to a scenario in which capturing and photographing are performed, the following describes an example of a working procedure of software and hardware of a terminal device 100.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a single-tap operation, and a control corresponding to the single-tap operation is a control of a camera application icon is used. The camera application invokes an interface of the application framework layer to enable the camera application, then enables the camera driver by invoking the kernel layer, and captures a static image or a video through the camera 193.

The following describes in detail the display method provided in the embodiments of this application based on the schematic diagram of the display system shown in FIG. 1 or FIG. 2, the schematic diagrams of hardware and software of the terminal device shown in FIG. 3 and FIG. 4A, and with reference to the procedure of the method for implementing display on a terminal device and the user interface that are provided in the embodiments of this application.

FIG. 5 shows an example of a procedure of a display method according to an embodiment of this application. The display method may include some or all of the following steps.

S101: A terminal device receives a user operation, where the user operation indicates to display a current location of the terminal device.

In an implementation, the terminal device may display an application, and a user may request to display the current location of the terminal device by using a user operation. Correspondingly, the terminal device performs the following step S 102 to step S104 in response to the user operation.

A scenario in which the user requests the current location of the terminal device by using a map application is used as an example. The following describes some user interfaces on the terminal device provided in this embodiment of this application.

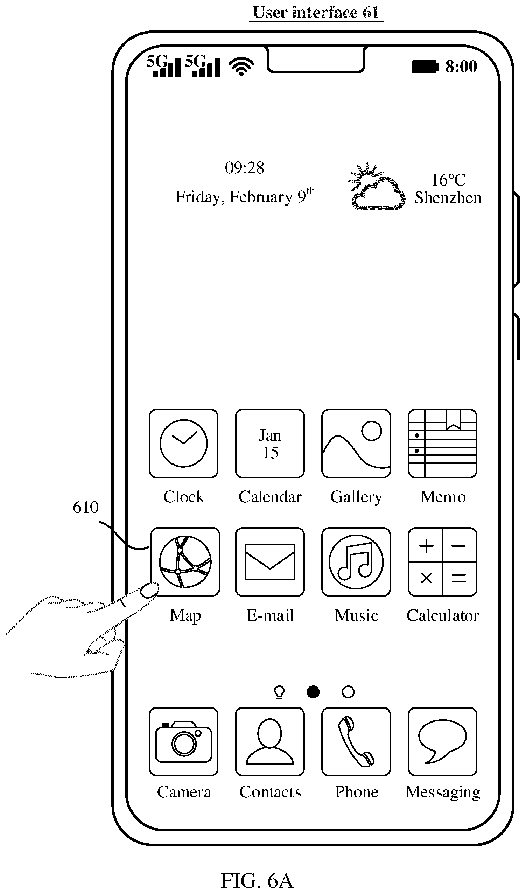

FIG. 6A shows an example a user interface 61 that is on a terminal device and that is configured to display an installed application. The user interface 61 displays a status bar, a calendar indicator, a weather indicator, a tray with a commonly used application icon, an icon 610 of a map application, an icon of a clock application, an icon of another application, and the like. The status bar may include one or more signal strength indicators of a mobile communication signal (which may also be referred to as a cellular signal), one or more signal strength indicators of a Wi-Fi signal, a battery status indicator, a time indicator, and the like.

In some embodiments, the user interface 61 shown in FIG. 6A may be a home screen (home screen). It may be understood that FIG. 6A shows only an example of a user interface of the terminal device, and should not constitute a limitation on this embodiment of this application.

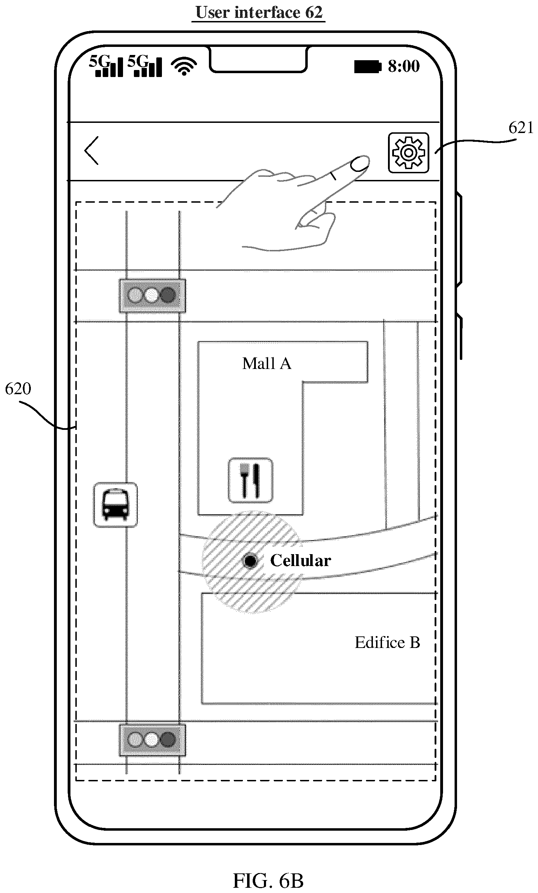

As shown in FIG. 6A, the terminal device may detect a first user operation performed on the icon 610 of the map application, and display, in response to the first user operation, a user interface 62 shown in FIG. 6B.

As shown in FIG. 6B, the user interface 62 may be an application main interface provided by the map application, and the user interface 62 may include a display window 620 and a setting control 621. As shown in FIG. 6B, a dashed box is used to represent the display window 620, and the display window 620 is configured to display a map and a location of a terminal device.

In some embodiments, the terminal device performs step S 102 to step S104 in response to the first user operation. That is, after detecting the first user operation, the terminal device displays, on the map, at least two locations currently obtained by the terminal device by using different positioning methods.

In some other embodiments, in response to the first user operation, the terminal device displays only the map, or displays the map and the current location of the terminal device. Further, the user may select, by using the setting control 621 on the user interface 62, whether to display a plurality of locations obtained by the terminal device by using different positioning methods.

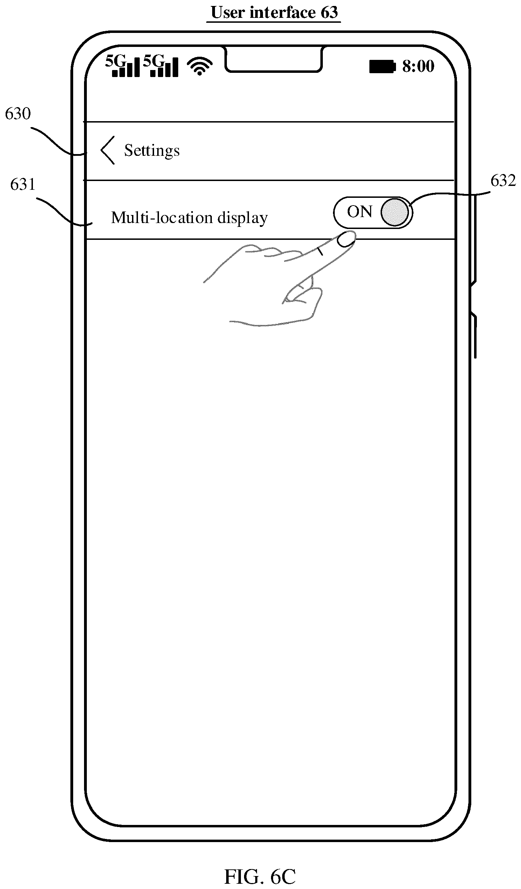

As shown in FIG. 6B, the terminal device may detect a second user operation performed on the setting control 611 of the electronic device; and display, in response to the second user operation, a user interface 63 shown in FIG. 6C.

FIG. 6C shows an example of a user interface 63 for setting an application on a terminal device. As shown in FIG. 6C, the user interface 63 includes a title bar 630, an option bar 631, and an on/off control 632, and option information "multi-location display" is displayed on the option bar 631. As shown in FIG. 6C, the terminal device may detect a third user operation performed on the on/off control 632 of the electronic device; and perform step S 102 in response to the third user operation.

Not limited to the first user operation shown in FIG. 6A and the third user operation shown in FIG. 6C, in this embodiment of this application, a user operation used to enable the multi-location display function may alternatively be implemented in another form. This is not limited in this embodiment of this application.

To help the user understand the option information shown in the option bar 631, the option information may alternatively be represented in another form. For example, the option information may further explain that the on/off control is used to enable simultaneous display, on the map, of a plurality of locations obtained by the terminal device by using different positioning methods. Therefore, the option information shown in the option bar 631 shown in FIG. 6C is not limited in this embodiment of this application.

In the manner of prompting the user shown in FIG. 6C, the user may choose, based on a requirement, whether to display the location of the terminal device in a multi-location display manner, thereby improving user experience.

S102: In response to the user operation, the terminal device obtains the current location of the terminal device by using at least two positioning methods to obtain at least two locations.

Specifically, the terminal device may obtain the current location of the terminal location by using N positioning methods. For example, the terminal obtains a first location by using a first positioning method, obtains a second location by using a second positioning method, and obtains an N^{th} location by using an N^{th} positioning method. In this case, the at least two locations are the first location, and the second location to the N^{th} location, where N is an integer greater than 2.

Positioning technologies used in the at least two positioning methods are different and/or devices for calculating locations in the at least two positioning methods are different.

For example, an example in which the at least two positioning methods include the first positioning method and the second positioning method is used for description.

In some embodiments, the positioning technologies used in the at least two positioning methods are different. It should be noted that the devices for calculating at least two locations by using the at least two positioning methods may be the same or may be different. For example, the at least two locations are a first location and a second location. If a GNSS positioning technology is used in the first positioning method, the terminal device calculates a current location of the terminal device based on the GNSS positioning technology to obtain the first location. If a cellular positioning technology is used in the second positioning method, the terminal device calculates a current location of the terminal device based on the cellular positioning technology to obtain the second location. For another example, the at least two locations are a first location and a second location. If a GNSS positioning technology is used in the first positioning method, the terminal device obtains a current location (that is, the first location) of the terminal device that is calculated by a satellite based on the GNSS positioning technology. If a cellular positioning technology is used in the second positioning method, the terminal device calculates a current location of the terminal device based on the cellular positioning technology to obtain the second location.

In some other embodiments, the devices for calculating locations in the at least two positioning methods are different. It should be noted that positioning technologies used in the at least two positioning methods may be the same or may be different. For example, the GNSS positioning technology is used in both the first positioning method and the second positioning method. In the first positioning method, the terminal device may calculate a current location of the terminal device to obtain the first location. In the second positioning method, a core network may calculate a current location of the terminal device based on the GNSS positioning technology to obtain the second location, and send the second location to the terminal device. Correspondingly, the terminal device receives the second location.

Positioning technologies used in the at least two positioning methods may be a GNSS positioning technology, a Bluetooth positioning technology, a wireless local area network (Wireless local area network, WLAN) positioning technology, a terrestrial beacon system (Terrestrial beacon system, TBS) positioning technology, a barometer (barometer), an ultra wide band (Ultra Wide Band, UWB) technology, and the like. This is not limited herein.

It should be noted that the cellular technology includes a 4G/LTE positioning technology and a 5G/NR positioning technology. The 4G/LTE positioning technology may further include an A-GNSS positioning technology, an observed time difference of arrival (Observed time difference of arrival, OTDOA) positioning technology, an uplink time difference of arrival (Uplink Time Difference of Arrival, UTDOA) positioning technology, and an enhanced cell identity (Enhanced cell ID, E-CID) positioning technology. The 5G/NR positioning technology may further include an A-GNSS positioning technology, an NR DL-TDOA positioning technology, an NR DL-AOD positioning technology, an NR UL-AoA positioning technology, an NR UL-TDOA positioning technology, an NR E-CID positioning technology, an NR Multi-RTT positioning technology, and an NR SL positioning technology.

Optionally, the positioning technologies used in the at least two positioning methods may also include any positioning technology in the cellular technology. For example, the at least two positioning methods include a first positioning method, and the A-GNSS positioning technology is used in the first positioning method. For another example, the at least two positioning methods include a first positioning method and a second positioning method, the A-GNSS positioning technology is used in the first positioning method, and the OTDOA positioning technology is used in the second positioning method. For another example, the at least two positioning methods include a first positioning method and a second positioning method, the Bluetooth positioning technology is used in the first positioning method, and the OTDOA positioning technology is used in the second positioning method.

Optionally, the at least two positioning methods may further include a conventional positioning method. In the conventional positioning method, the terminal device may calculate a current location of the terminal device by integrating a plurality of positioning technologies. For example, the terminal device calculates locations obtained by using the plurality of positioning technologies to obtain the current location of the terminal device.

Optionally, the at least two positioning methods may include a 5G positioning method. The 5G positioning method may be a positioning method using a 5G positioning technology. An execution body calculating a location of the terminal device by using the 5G positioning technology may be a terminal device or a positioning device. The 5G positioning method may be a positioning method in which the positioning device is a 5G network device. For example, in the 5G positioning method, the terminal device may calculate the current location of the terminal device by using the 5G positioning technology, or the 5G core network may calculate the current location of the terminal device by using a technology other than the 5G positioning technology.

S103: The terminal device determines a label based on the at least two locations.

A quantity of labels may be one. For example, the terminal may determine, based on one of the at least two locations, a label corresponding to the location to obtain one label. Alternatively, the quantity of labels may be at least two. For example, the terminal may determine, for each of the at least two locations, a label corresponding to each location to obtain at least two labels.

In some embodiments, after obtaining the current location of the terminal by using at least two positioning methods to obtain at least two locations, the terminal device may determine a label based on the at least two locations. The label is used to distinguish between the at least two locations.

In some other embodiments, the terminal device receives a first location and a first identifier that are sent by a positioning device, where the first location is the current location of the terminal device obtained by the positioning device by using one of the at least two positioning methods, and the at least two locations include the first location; and the terminal device generates a label based on the first identifier. For example, the positioning device is a core network. The core network calculates the current location of the terminal device based on the cellular positioning technology to obtain the first location. In this case, the core network may send the first location and the first identifier to the terminal device. The first identifier may be an identifier indicating a positioning technology, for example, "cellular" or "UL TDOA". The first identifier may be an identifier indicating a positioning device, for example, an identity of the positioning device. Further, after receiving the first location and the first identifier, the terminal device may determine, based on the first identifier, a label corresponding to the first location.

In an implementation, the terminal device may determine the label based on positioning technologies corresponding to the at least two locations. For example, the terminal device obtains the first location based on the cellular positioning technology, and obtains the second location based on the WLAN positioning technology. In this case, the terminal device may determine two labels, determine the cellular as the label corresponding to the first location, and determine WLAN as the label corresponding to the second location. Alternatively, the terminal may determine only one label, and determine cellular as the label corresponding to the first location. For another example, the terminal device calculates the current location of the terminal device based on the 5G positioning technology to obtain the first location, and calculates the current location of the terminal device based on the WLAN positioning technology to obtain the second location. In this case, the terminal device may determine two labels, determine 5G as a label corresponding to the first location, and determine WLAN as a label corresponding to the second location. Alternatively, the terminal may determine only one label, and determine 5G as a label corresponding to the first location.

In another implementation, the terminal device may determine the label based on a device for calculating at least two locations. For example, the first location is obtained by the terminal device through calculation, and the second location is sent to the terminal device after the 5G core network calculates the current location of the terminal device. In this case, the terminal device may determine only one label, for example, determine that a label corresponding to the second location is 5G. Alternatively, the terminal device may determine two labels, for example, determine UE-base (or UE-B) as the label corresponding to the first location, and determine 5G as the label corresponding to the second location.

S104: The terminal device displays the at least two locations and a label on a map.

Specifically, the terminal device may display at least two locations and at least one label on the map. The at least one label is used to distinguish between the at least two locations.

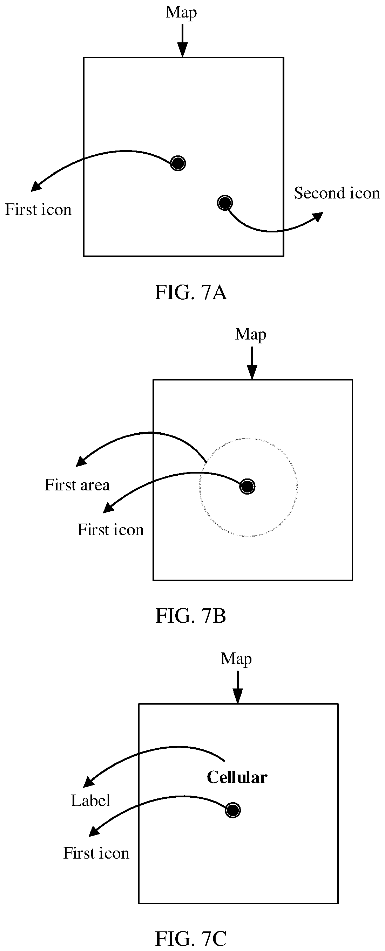

Optionally, the terminal device may separately display icons at the at least two locations on the map. It may be understood that the icon indicates the at least two locations on the map, and the user may determine the current location of the terminal device by viewing the icon. As shown in FIG. 7A, a circle with a white edge represents an icon. It is assumed that the at least two locations are a first location and a second location, the terminal device may display a first icon at the first location on the map, and display the second icon at the second location on the map.

Optionally, the terminal device may display, on the map by using different colors and/or different shapes, the icons corresponding to the at least two locations. For example, if the at least two locations include the first location and the second location, the terminal device may display the first icon at the first location, and display the second icon at the second location. The first icon may be a yellow solid circle, and the second icon may be a black solid circle; or the first icon may be a solid circle with a diameter of n millimeters, and the second icon may be a solid circle with a diameter of m millimeters; or the first icon may be a yellow solid circle with a diameter of n millimeters, and the second icon may be a black solid circle with a diameter of m millimeters, where n ≠ m, and n and m are both positive numbers.

In some embodiments, the terminal device identifies a current environment based on the at least two locations; and the terminal device determines, based on a correspondence between an environment and a positioning method, that a target location is a location obtained by using a positioning method corresponding to the current environment, where an icon displayed at the target location is different from an icon displayed at a location other than the target location among the at least two locations. For example, when determining that the at least two locations are in a building, the terminal device determines that the current environment is an indoor environment. Further, the terminal device may determine, based on a correspondence between an environment and a positioning method, that the positioning method corresponding to the indoor environment is a 5G positioning method. Therefore, the terminal device may determine a location obtained by using the 5G positioning method as the target location, display a yellow icon at the target location, and display a white icon at a location other than the target location among the at least two locations.

Optionally, the terminal device may display an error range of each of the at least two locations by using the location as a center, or the terminal device may display an error range of a location by using this location among the at least two locations as a center. It should be noted that a method for determining, by a terminal device, an error range of a current location of the terminal device is not limited herein.

The first location is used as an example, and the first location is one of the at least two locations. As shown in FIG. 7B, a terminal device displays a first icon at a first location on a map. Further, the terminal device displays a first area on the map by using the first icon as a circle center. In FIG. 7B, a circle area with oblique lines is used to represent the first area, and the first area is an error range of the first location. It should be noted that, in FIG. 7B, the error range is displayed by using the circular area with oblique lines. During actual application, the terminal device may alternatively display the error range by using a gray area or in another manner, and the terminal device may alternatively represent the error range in another shape. This is not limited herein.

Optionally, the terminal device may display the label within a preset distance range of the at least two locations. The first location is used as an example, and the first location is one of the at least two locations. As shown in FIG. 7C, a terminal device may display a first icon at a first location on a map, and display a label at a location that is a target distance from the first icon. As shown in FIG. 7C, the label may be cellular, and the label may indicate that a positioning technology used at the first location of the first icon is a cellular positioning technology or that a device for calculating the first location of the first icon is a core network device.

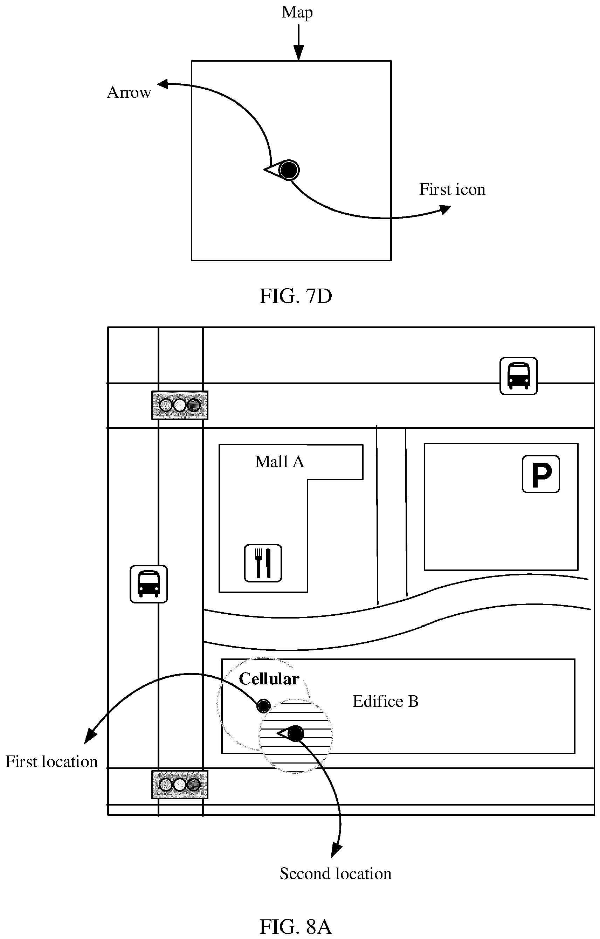

Optionally, the terminal device may display an arrow at the at least two locations, and the arrow indicates a forward direction of the user. The first location is used as an example, and the first location is one of the at least two locations. As shown in FIG. 7D, a terminal device may display a first icon at a first location on a map, calculate a possible moving track direction of a user at the first location by using an inertia measurement unit (Inertia measurement unit, IMU), and further, display an arrow shown in FIG. 7D at the first icon. The terminal device may obtain an inertia direction of the user by using the inertia measurement unit, and the terminal device may calculate the inertia direction of the user by using another method. This is not limited herein. It should be noted that the terminal device may select one location from the at least two locations to display the arrow. A method for selecting one location from the at least two locations by the terminal device is not limited herein.

It should be noted that the terminal device may display an icon and at least one label at each of the at least two locations, and may further display the label and/or the arrow.

In an implementation, the terminal device may display at least two locations and one label on the map, and the label may indicate a positioning technology used at one of the two locations or a device for calculating the location.

FIG. 8A is a schematic diagram of displaying locations by a terminal device according to an embodiment of this application. The at least two locations are a first location and a second location, and the terminal device determines that a label corresponding to the first location is cellular. As shown in FIG. 8A, a black circle with a white edge is used to represent an icon, an area with oblique lines is used to represent an error range corresponding to the first location, and an area with transverse lines is used to represent an error range corresponding to the second area. As shown in FIG. 8A, the terminal device separately displays an icon at the first location and the second location, displays the label "cellular" near the first location, displays the error range corresponding to the first location by using the first location as a center, and displays the error range corresponding to the second location by using the second location as a center. The terminal device may further display an arrow at the second location, and the arrow indicates an inertia direction of a user.

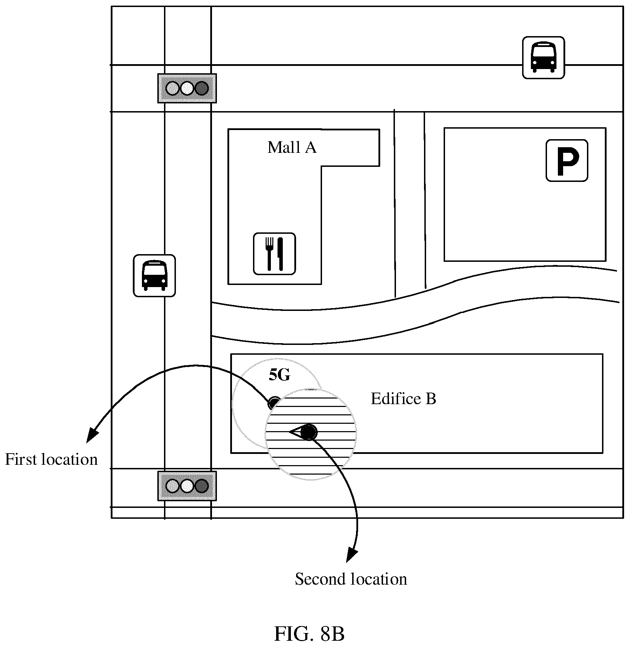

FIG. 8B is another schematic diagram of displaying locations by a terminal device according to an embodiment of this application. The at least two locations are a first location and a second location, and the terminal device determines that a label corresponding to the first location is 5G. As shown in FIG. 8B, a black circle with a white edge is used to represent an icon, an area with oblique lines is used to represent an error range corresponding to the first location, and an area with transverse lines is used to represent an error range corresponding to the second area. As shown in FIG. 8B, the terminal device separately displays an icon at the first location and the second location, displays the label "5G" near the first location, displays the error range corresponding to the first location by using the first location as a center, and displays the error range corresponding to the second location by using the second location as a center. The terminal device may further display an arrow at the second location, and the arrow indicates an inertia direction of a user. It should be noted that 5G may alternatively be displayed as 5g.

In another implementation, the terminal device may display, on the map, at least two locations and a label corresponding to each of the at least two locations. The label may indicate a positioning technology used at any one of the two locations and/or a device for calculating any one of the two locations.

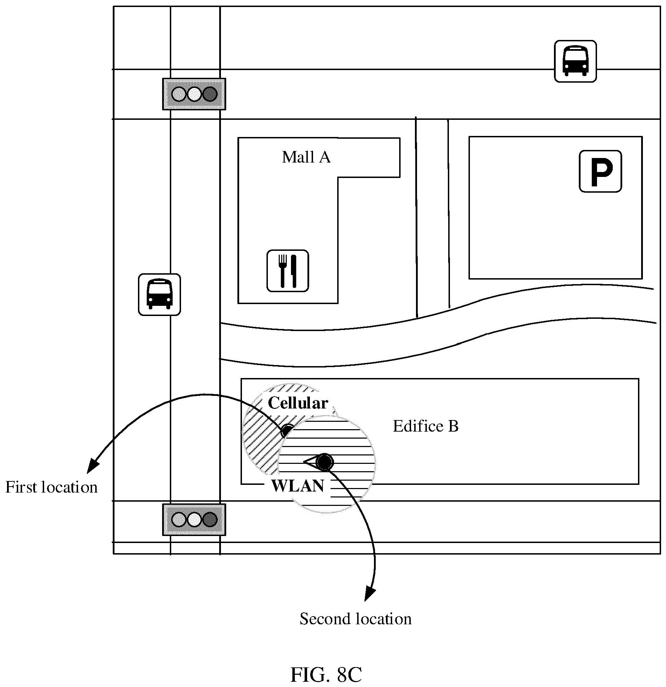

FIG. 8C is still another schematic diagram of displaying locations according to an embodiment of this application. The at least two locations are a first location and a second location, and the terminal device determines that a label corresponding to the first location is cellular, and determines that a label corresponding to the second location is WLAN. As shown in FIG. 8C, a black circle with a white edge is used to represent an icon, an area with oblique lines is used to represent an error range corresponding to the first location, and an area with transverse lines is used to represent an error range corresponding to the second area. As shown in FIG. 8C, the terminal device separately displays an icon at the first location and the second location, displays the label "cellular" near the first location, displays the label "WLAN" near the first location, displays the error range corresponding to the first location by using the first location as a center, and displays the error range corresponding to the second location by using the second location as a center. The terminal device may further display an arrow at the second location, and the arrow indicates an inertia direction of a user.

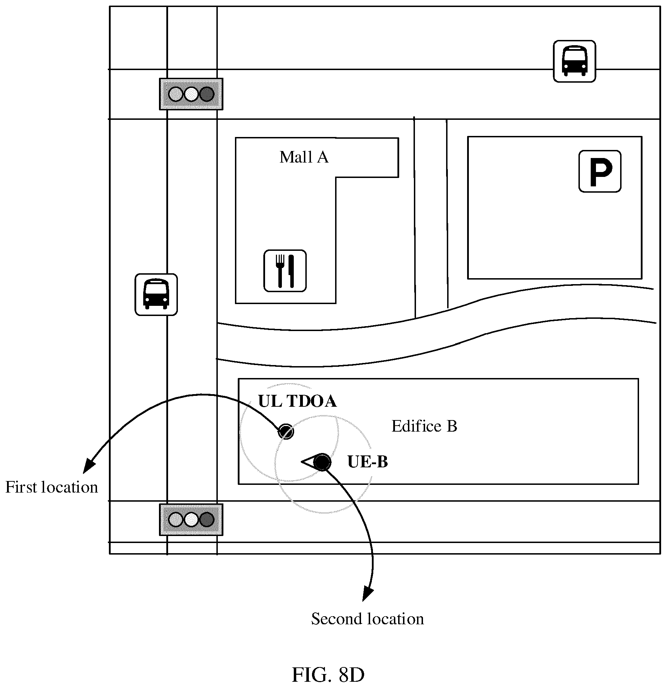

FIG. 8D is yet another schematic diagram of displaying locations according to an embodiment of this application. The at least two locations are a first location and a second location, and the terminal device determines that a label corresponding to the first location is UL TDOA, and determines that a label corresponding to the second location is UE-B. As shown in FIG. 8D, a black circle with a white edge is used to represent an icon, an area with oblique lines is used to represent an error range corresponding to the first location, and an area with transverse lines is used to represent an error range corresponding to the second area. As shown in FIG. 8D, the terminal device separately displays an icon at the first location and the second location, displays the label "UL TDOA" near the first location, displays the label "UE-B" near the first location, displays the error range corresponding to the first location by using the first location as a center, and displays the error range corresponding to the second location by using the second location as a center. The terminal device may further display an arrow at the second location, and the arrow indicates an inertia direction of a user.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application discloses a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effects.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, some or all the procedures or functions described in this application are generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one network site, computer, server, or data center to another network site, computer, server, or data center in a wired (such as a coaxial cable, an optical fiber, or a digital subscriber line) or wireless (such as infrared, wireless, or microwave) manner. The computer-readable storage medium may be any usable medium accessible by a computer, or a data storage device such as a server or a data center in which one or more usable media are integrated. The usable medium may be a magnetic medium (for example, a floppy disk, a hard disk, or a magnetic tape), an optical medium (for example, a DVD), a semiconductor medium (for example, a solid-state disk Solid-State Disk), or the like.

A person of ordinary skill in the art may understand that all or some of the procedures in the methods in the embodiments may be implemented by using a computer program instructing relevant hardware. The program may be stored in a computer-readable storage medium. When the program is executed, the procedures in the foregoing method embodiments can be included. The foregoing storage medium includes any medium that can store program code, for example, a ROM, a random access memory RAM, a magnetic disk, or an optical disc.

In summary, the foregoing descriptions are merely embodiments of the technical solutions of this application, but are not intended to limit the protection scope of this application. Any modification, equivalent substitution, and improvement made based on the disclosure of this application shall fall within the protection scope of this application.

## Claims

1. A display method, applied to a terminal device, wherein the method comprises:
receiving, by the terminal device, a user operation, wherein the user operation indicates to display a current location of the terminal device;
in response to the user operation, obtaining, by the terminal device, the current location of the terminal device by using at least two positioning methods to obtain at least two locations; and
displaying, by the terminal device, the at least two locations and a label on a map, wherein the label is used to distinguish between the at least two locations.

2. The method according to claim 1, wherein positioning technologies used in the at least two positioning methods are different and/or devices for calculating locations in the at least two positioning methods are different.

3. The method according to claim 1 or 2, wherein the label indicates a positioning technology that is used in at least one of the at least two positioning methods or that indicates a device for calculating at least one of the at least two locations.

4. The method according to any one of claims 1 to 3, wherein the obtaining the current location of the terminal device by using at least two positioning methods comprises:
receiving, by the terminal device, a first location and a first identifier that are sent by a positioning device, wherein the first location is the current location of the terminal device obtained by the positioning device by using one of the at least two positioning methods, and the at least two locations comprise the first location; and
generating, by the terminal device, the label based on the first identifier.

5. The method according to any one of claims 1 to 4, wherein the at least two positioning methods comprise a 5G positioning method using a fifth generation mobile communication technology 5G, the at least two locations comprise a second location, and the second location is obtained by using the 5G positioning method.

6. The method according to any one of claims 1 to 5, wherein the displaying, by the terminal device, the at least two locations on a map comprises:
separately displaying, by the terminal device, icons at the at least two locations on the map.

7. The method according to claim 6, wherein the icons displayed at the at least two locations have different colors and/or shapes.

8. The method according to any one of claims 1 to 7, wherein the method comprises:
displaying, by the terminal device, an error range of each of the at least two locations by using the location as a center.

9. The method according to claim 6, wherein the method further comprises:
identifying, by the terminal device, a current environment based on the at least two locations; and
determining, by the terminal device based on a correspondence between an environment and a positioning method, that a target location is a location obtained by using a positioning method corresponding to the current environment, wherein an icon displayed at the target location is different from an icon displayed at a location other than the target location among the at least two locations.

10. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 9.

11. A computer program product comprising instructions, wherein when the computer program product runs on an electronic device, the electronic device is enabled to perform the method according to any one of claims 1 to 9.

12. A computer-readable storage medium, comprising instructions, wherein when the instructions are run on an electronic device, the electronic device is enabled to perform the method according to any one of claims 1 to 9.
